# EUROPEAN PATENT SPECIFICATION

(11) **EP 2 340 156 B1**
(45) Date of publication and mention of the grant of the patent: **25.07.2012**
(21) Application number: 09792831.1
(22) Date of filing: 22.09.2009
(51) Int. Cl.: B29C 33/40, B29D 11/00

(54) **METHOD FOR CAST MOLDING CONTACT LENSES**
GUSSFORMVERFAHREN FÜR KONTAKTLINSEN
PROCÉDÉ POUR MOULAGE PAR COULÉE DE LENTILLES DE CONTACT

(30) Priority: 24.09.2008 US 99601 P
(43) Date of publication of application: 06.07.2011
(73) Proprietor: Novartis AG, 4056 Basel (CH)
(72) Inventor: LIU, Alice, Weimin, Alpharetta Georgia 30022 (US); TOLLEFSON, Norris, M., Cumming Georgia 30041 (US); KOSMAN, Dale, Richard, Lombard Illinois 60148 (US)
(74) Representative: Bohest AG
(86) International application number: PCT/US2009/057801
(87) International publication number: WO 2010/036639

(56) References cited:
- US-A- 4 208 365
- US-A- 4 534 916
- US-A1- 2006 051 454

## Description

### TECHNICAL FIELD OF THE INVENTION

The present invention relates to improvements in cast molding of contact lenses. In particular, the present invention is related to an improved method of cast molding contact lenses comprises injection molding at least one of sections from a copolymer of propylene and ethylene.

### BACKGROUND OF THE INVENTION

Contact lenses, which are to be manufactured economically in large unit numbers, are preferably manufactured by the so-called mould or full-mould process. Lens molds for making contact lenses are well known to a person skilled in the art and, for example, are employed in cast molding or spin casting. For example, a mold (for full cast molding) generally comprises at least two mold sections (or portions) or mold halves, i.e. first and second mold halves. The first mold half defines a first molding (or optical) surface and the second mold half defines a second molding (or optical) surface. The first and second mold halves are configured to receive each other such that a lens forming cavity is formed between the first molding surface and the second molding surface. The molding surface of a mold half is the cavity-forming surface of the mold and in direct contact with a fluid polymerizable composition.

Most common mold material used for casting molding contact lenses is either a polypropylene or polystyrene. However, various problems have been associated with injection molding of such materials. For example, many grades of polypropylene exhibit poor processibility; while others, although having excellent processibility, result in an unsatisfactory mold due to surface distortions and the like. Several patents or patent application publications described methods to identify or improve polypropylene properties to improve mold quality. US 5843346 discloses that improvements in the static cast molding of contact lenses. The improvement comprises injection molding at least one of the mold sections from a thermoplastic polyolefin resin having a melt flow rate of at least about 21 g/10 minutes. US 2006/0051454 A1 also discloses the improvements in the static cast molding of contact lenses. The improvement comprises injection molding at least one of the mold sections from a Zieglar-Natta catalyst based polyolefin having a melt flow rate of less than 21 g/10 min. US 6582631 discloses at least one of the male and female mold sections is injection molded from a metallocene-catalyzed thermoplastic polyolefin resin.

US 4534916 and US 4208365 describe propylene - ethylene copolymers as possible materials for molds for the production of contact lenses.

However, there still exists a need in the art for an improved method of cast molding contact lenses with molds formed from polypropylene homopolymer or polypropylene copolymer to provide consistently superior qualities in the molded lenses.

### SUMMARY OF THE INVENTION

The present invention provides a method of cast molding contact lenses, comprising the steps of:
A method of cast molding contact lenses, comprising the steps of:
   introducing a lens forming material in a mold, wherein the mold comprises a male section and a female section, wherein the male section and the female section are configured to receive each other to form a lens forming cavity, wherein at least one of the male section and the female section is injection molded from a copolymer of propylene and ethylene, wherein the copolymer comprises ethylene from about 0.1 percent to about 2.0 percent by weight and has a flexural modulus from about 950 to 1400 MPa;
   curing the lens forming material in the lens forming cavity to form a contact lens.

### DETAILED DESCRIPTION OF THE INVENTION

Reference now will be made in detail to the embodiments of the invention. It will be apparent to those skilled in the art that various modifications and variations can be made in the present invention without departing from the scope of the invention. For instance, features illustrated or described as part of one embodiment, can be used on another embodiment to yield a still further embodiment. Thus, it is intended that the present invention cover such modifications and variations as come within the scope of the appended claims and their equivalents. Other objects, features and aspects of the present invention are disclosed in or are obvious from the following detailed description. It is to be understood by one of ordinary skill in the art that the present discussion is a description of exemplary embodiments only, and is not intended as limiting the broader aspects of the present invention.

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well known and commonly employed in the art. As employed throughout the disclosure, the following terms, unless otherwise indicated, shall be understood to have the following meanings.

The term "contact lens" employed herein in a broad sense and is intended to encompass any hard or soft lens used on the eye or ocular vicinity for vision correction, diagnosis, sample collection, drug delivery, wound healing, cosmetic appearance (e.g., eye color modification), or other ophthalmic applications.

A "hydrogel material" refers to a polymeric material which can absorb at least 10 percent by weight of water when it is fully hydrated. Generally, a hydrogel material is obtained by polymerization or copolymerization of at least one hydrophilic monomer in the presence of or in the absence of additional monomers and/or macromers. Exemplary hydrogels include, but are not limited to, poly (vinyl alcohol) (PVA), modified polyvinylalcohol (e.g., as nelfilcon A), poly (hydroxyethyl ethacrylate), poly (vinyl pyrrolidone), PVAs with polycarboxylic acids (e.g., carbopol), polyethylene glycol, polyacrylamide, polymethacrylamide, silicone-containing hydrogels, polyurethanes, polyureas, and the like. A hydrogel can be prepared according to any methods known to a person skilled in the art.

A "HEMA-based hydrogel" refers to a hydrogel obtained by copolymerization of a polymerizable composition comprising hydroxyethylmethacrylate (HEMA).

A "silicone hydrogel" refers to a hydrogel obtained by copolymerization of a polymerizable composition comprising at least one silicone-containing monomer, at least one silicone-containing macromer, or at least one silicone-containing pre-polymer.

A "lens-forming material" refers to a material which can be polymerized and/or crosslinked actinically or thermally to form a contact lens.

A "mold" refers to a rigid object that may be used to form lenses from uncured formulations. The preferred molds are two part molds as described above, where either the male mold section or/and the female mold section is made of the polypropylene homopolymer or polypropylene copolymer. The preferred method of making the molds of the invention is by injection molding using known techniques, but the molds could be made by other techniques lathing, diamond turning, or laser cutting.

The terms "propylene polymers" and "polypropylene" are used interchangeably, and generally refer to propylene homopolymers which include both Zieglar-Natta catalyzed based polypropylene and metallocene catalyzed polypropylene as well as all of the geometrical configurations of the material. These configurations include, but are not limited to, isotactic, syndiotactic, and atactic symmetries.

The terms "pristine polypropylene" refers to the starting polypropylene prior to going through the controlled rheology process.

The term "controlled rheology polypropylene" refers to a polypropylene produced from a pristine polypropylene through the controlled rheology process and has properties different than the pristine polypropylene. Any known or suitable controlled rheology processes can be used, for example, as disclosed in U.S. Pat. Nos. 3,940,379; 4,951,589; 5,530,073 and 6,599,985.

As an illustrative example, the controlled rheology process can be carried out as follow. A polypropylene resin, inorganic or organic peroxide can be charged to a blending zone. A blanket of an inert gas such as nitrogen, argon and the like is maintained within the blending zone by feeding the inert gas to said zone. The peroxide is uniformly blended with the polypropylene resin by means of an agitator, paddle, blade or the like within the blending zone. Although it is not considered strictly necessary to maintain the blending zone under an inert blanket, use of an inert gas is considered preferable for safety reasons. If desired, the blending of the polypropylene and peroxide can be effected upon admixture of the components during the extrusion operation.

Any inorganic or organic peroxide can be employed in the process of the present invention. Illustrative of the peroxides which can be suitably employed are hydrogen peroxide, dicumyl peroxide, t-butyl peroxy isopropyl carbonate, di-tertbutyl peroxide, p-chlorobenzoyl peroxide, dibenzoyl diperoxide, t-butyl cumyl peroxide, t-butyl hydroxyethyl peroxide, di-t-amyl peroxide, 2,5-dimethylhexene-2,5-diperisononanoate and the like. The peroxide can be blended with the propylene resin in amounts varying from about 0.01 to 0.1 percent by weight of propylene resin.

The resulting peroxide/polypropylene blend can then be charged to the hopper of a high shear zone such as provided by an extruder. A condition of high shear is maintained within the extruder by heating the resin blend to a molten state with heating means associated with the extruder and working the melt in the annular zone between the extruder screw and the inner wall of the barrel of the extruder, as the melt passes through the extruder to the forming means or die which terminates the extruder. Thermal mechanical action of the extruder takes place at a temperature within the range of from about 150.degree. C. to about 300.degree. C.

The controlled rheology polypropylene exhibit narrower molecular weight distribution, higher melt flow rate, lower viscosity, less elastic character than the pristine polypropylene. An exemplary controlled rheology polypropylene mold for cast molding contact lenses is generally described in copending U.S. patent application, Ser. No. 61/008,417, by Norris M. Tollefson, filed on Dec. 20, 2007, which reference is incorporated herein in its entirety by reference.

As used herein, the term "melt flow rate" is a measure of the ease of flow of the melt of a thermoplastic polymer. It is defined as the weight of polymer in grams flowing in 10 minutes through a capillary of specific diameter and length by a pressure applied via prescribed alternative gravimetric weights for alternative prescribed temperatures. The method is given in ASTM D1238. The melt flow rate is an indirect measure of molecular weight, high melt flow rate corresponding to low molecular weight. At the same time, the melt flow rate is a measure of the ability of the molton material to flow under pressure.

As used herein, the term "flexural modulus" is a measure of a material's stiffness and is measured according to ASTM D-790.

As used herein, the term "mold warpage or cylinder" means the distortion of the mold. The radius of curvature of the front curve lens mold (female mold) and the back curve lens mold (male mold) together define the corrective power of the contact lens. Warpage of the mold as an individual piece is determined by measuring the radius of curvature in the direction aligned with the gate (the source of polypropylene for an injection molded lens mold) and the radius of curvature perpendicular to the gate. The convention says that radius of curvature at 90° orientation to gate minus radius of curvature at 0° orientation define warpage (or cylinder). With the gate at 12 o'clock, the radius of curvature aligned with the gate is measured between 12 and 6 o'clock, perpendicular to the gate is between 3 and 9 o'clock. Two common techniques involve interferometry and optical/visual inspection. Using laser reflectance, optical inspection is more conducive to automated measurements. Laser reflectance for automated visual inspection was used to measure radius of curvature in polypropylene lens molds.

"Out-of-roundness" is defined as the maximum difference between chord lengths of the diameter of the mold's lens edge-defining feature. Typically, the largest diameter was located in the 12 and 6 o'clock meridian through the gate, while the smallest was located perpendicular to the gate through the 3 and 9 o'clock meridian. It is typically measured with a non-contact optical instrument such as a toolmaker's microscope or a video metrology system, specifically an Optical Gaging Products Avant 200. "Cylinder" and "out-of-roundness" describe the same defect, but in different specific areas of the contact lens mold: "cylinder" in the 3-dimensional radius of curvature and "out-of-roundness" in the lens edge-defining diameter.

The invention is partly based on the discovery that, when a copolymer of propylene and ethylene is used as a mold material, the mold warpage can be reduced, comparing to the propylene homopolymer. It is newly found that when the ethylene content is above 2.0%, no reduction of mold warpage can be obtained.

The invention is further partly based on the discovery that, within limits setting at the immediate above paragraph, the copolymer having a flexural modulus lower than 1400 MPa can result in a smaller mold warpage. However, when a flexural modulus is lower than 950 MPa, the reduction of mold warpage is not observed.

The invention is still further partly based on the discovery that, within limits setting at the immediate above two paragraphs, the addition of nucleating agents to of the polypropylene copolymer can result in a smaller mold warpage.

Although the inventors do not wish to be bound by any particular theory, it is believed that a copolymer of propylene and ethylene is more flexible than a propylene homopolymer. The flexible mold can compensate for the volume shrinkage during injection molding. All these factors contribute to a reduction of mold warpage.

However, when the ethylene content is higher than 2% in the copolymer, the flexural modulus of the copolymer decreases rapidly and the copolymer becomes too flexible to retain mold shapes and results in an increase of mold warpage.

The present invention provides a method of cast molding contact lenses, comprising the steps of:
introducing a lens forming material in a mold, wherein the mold comprises a male section and a female section, wherein the male section and the female section are configured to receive each other to form a lens forming cavity, wherein at least one of the male section and the female section is injection molded from a copolymer of propylene and ethylene, wherein the copolymer comprises ethylene from about 0.1 percent to about 2.0 percent by weight and has a flexural modulus from about 950 to 1400 MPa;
curing the lens forming material in the lens forming cavity to form a contact lens.

According to the present invention, any lens-forming materials known in the art may be used in the invention. Preferred lens-forming materials are capable of forming hydrogels. A lens-forming material may be made up of vinylic monomers like HEMA (hydroxyethylmethacrylate) or may comprise one or more prepolymers, optionally one or more vinylic monomers and/or macromers and optionally further include various components, such as photoinitiator, visibility tinting agent, fillers, and the like. It should be understood that any silicone-containing prepolymers or any silicone-free prepolymers can be used in the present invention. While the selection of a lens-forming material is largely determined upon the final modality of use of the final contact lens, the presently preferred lens material is a HEMA-based hydrogel or a silicone hydrogel.

Examples of preferred lens forming polymers comprise at least one silicone-containing monomer, at least one silicone-containing macromer, or at least one silicone-containing pre-polymer and are described in U.S. Pat. No. 5,760,100, 6,951,894, which are incorporated herein by references in their entireties.

Examples of preferred lens forming polymers comprise vinylic monomers like HEMA (hydroxyethylmethacrylate) and are described in U.S. Pat. No. 4,405,773 (Loshaek et al.), 4,668,240 (Loshaek et al.), which are incorporated herein by references in their entireties.

In according with the present invention, any conventional production method such as, for example, a method in which a propylene-ethylene gas mixture containing the desired amount of ethylene is subjected to polymerization under definite conditions, a method in which the mixing ratio of both of the gases is varied either continuously or intermittently during the polymerization, or a method in which the reaction temperature of the reaction pressure is varied so as to control the conversion yield of ethylene. A copolymer of propylene and ethylene can also be made by physically blending of propylene and ethylene.

In accordance with the present invention, a copolymer of propylene and ethylene has an ethylene content from 0.1 to 2 weight percent, more preferably from 0.2 to 1 weight percent, further more preferably from 0.3 to 0.8 weight percent.

In accordance with the present invention, a copolymer of propylene and ethylene has a flexural modulus from about 950 to 1400 MPa, more preferably from 1100 to 1350 MPa, further more preferably from 1250 to 1300 MPa.

Examples of Commercially-Available Polypropylene Homoplymers and Random Copolymers of propylene and ethylene are provided in the following table.

| | | **Melt Flow** | | |
|---|---|---|---|---|
| **Manufacturer** | **Grade** | **Rate (g/10min.)** | **Ethlyene, % weight** | **Flexural Modulus(MPa)** |
| Exxon | 1654 | 16 | 0 | 1550 |
| Flint Hills | P4C5N-046 | 20 | 0 | 1590 |
| Flint Hills | P4C5B-075 | 20 | 0 | 1300 |
| Flint Hills | P5C5N-062 | 20 | <2 | 1300 |
| Flint Hills | 12N25Acs296 | 25 | <2 | 1655 |
| Flint Hills | 12R25A | 25 | <2 | 1140 |
| Total Polyolefins | 3727W | 20 | <2 | 1310 |
| Total Polyolefins | 3727WZ | 20 | <2 | 1310 |
| Sunoco | 52T30V | 30 | <2 | 1345 |
| Basell | SV954 | 35 | <2 | 1345 |
| Flint Hills | 13M25Acs328 | 25 | 2-4 | 1010 |
| Flint Hills | P5M6K-048 | 35 | 2-4 | 1050 |
| Formosa | 7335A | 35 | 2-4 | 1140 |
| Total Polyolefins | 6823MZ | 32 | 2-4 | 1030 |

In according with the present invention, many types of nucleating agents are suitable for inclusion in the copolymer of propylene and ethylene formulations. Suitable nucleating agents are disclosed by, for example, H. N. Beck in Heterogeneous Nucleating Agents for Polypropylene Crystallization, 11 J. APPLIED POLY. SCI. 673-685 (1967) and in Heterogeneous Nucleation Studies on Polypropylene, 21 J. POLY. SCI.: POLY. LETTERS 347-351 (1983). Exemplary nucleating agent include, but are not limited to, microtalc, sorbitol derivatives, phosphate salts, sodium benzoate, sodium 2,2'-methylenebis(4,6-di-tert-butylphenyl) phosphate, aluminum 2,2'-methylenebis(4,6-di-tert-butylphenyl) phosphate, dibenzylidene sorbitol, di(p-tolylidene) sorbitol, di(p-ethylbenzylidene) sorbitol, bis(3,4-dimethylbenzylidene) sorbitol, and N',N'-dicyclohexyl-2,6-naphthalenedicarboxamide, and salts of disproportionated rosin esters. Preferably, the nucleating concentration ranges from 500 to 3000 part per million by weight of the copolymer of propylene and ethylene resin.

In accordance with the present invention, many types of antistatic agents which are suitable for inclusion in the copolymer of propylene and ethylene formulations of this invention. Suitable antistatic agents can be ionic or nonionic. Ionic antistatic agents include cationic compounds, such as quaternary ammonium, phosphonium, or sulfonium salts, and anionic compounds, usually sodium salts of sulfonates, phosphates, and carboxylic acids. Nonionic antistatic agents include esters, such as glycerol esters of fatty acids, and ethoxylated tertiary amines. The molecules of an antistatic agent often have both hydrophilic and hydrophilic areas, similar to those of a surfactant; the hydrophobic side interacts with the surface of the material, while the hydrophilic side interacts with the air moisture and binds the water molecules from the air to increase the surface conductivity. Antistatic agents also can improve surface lubrication and act as mold release agents. A particularly preferred antistatic agent for the present invention is glyceryl monostearate. Preferably, the antistatic agent ranges from 0.5 to 1 percent by weight of copolymer of propylene and ethylene.

The previous disclosure will enable one having ordinary skill in the art to practice the invention. In order to better enable the reader to understand specific embodiments and the advantages thereof, reference to the following examples is suggested.

### Example 1 (comparative example)

Pellets of polypropylene 1654, which is available from Exxon, are introduced into the injection molding machines, one dedicated to the FC (female) mold half and a second to the BC (male) mold half. Process parameters are set at nominal values, based on experience molding polypropylene. Nominal parameters represent the optimal settings for this grade of polypropylene in a production setting. Minor adjustments are made to fill time, fill rate, recovery time, injection pressure, hold time, hold pressure, mold temperature, etc. Optimization is achieved when cylinder = 0 ± 0.020 mm or more preferable 0 ± 0.010 mm and out-of-roundness = 0 ± 0.020 mm or more preferable 0 ± 0.010 mm for both FC (female) mold half and the BC (male) mold half.

### Example 2 (comparative example)

The FC (female) mold half and the BC (male) mold half are made as described above with pellets of polypropylene P4C5B-075 which is available from Flint Hills.

### Example 3 (comparative example)

The FC (female) mold half and the BC (male) mold half are made as described above with pellets of polypropylene P4C5N-046 which is available from Flint Hills.

### Example 4 (invention)

Pellets of copolymer of propylene and ethylene P5C5N-062, which is available from Flint Hills, are introduced into the injection molding machines, one dedicated to the FC (female) mold half and a second to the BC (male) mold half. Process parameters are set at nominal values, based on experience molding polypropylene. In several iterative cycles of adjustment to process parameters and measurement of mold dimensions, the optimized process parameters are determined. Typically, adjustments are made to fill time, fill rate, recovery time, injection pressure, hold time, hold pressure, mold temperature, etc. Optimization is achieved when cylinder = 0 ± 0.020 mm or more preferable 0 ± 0.010 mm and out-of-roundness = 0 ± 0.020 mm or more preferable 0 ± 0.010 mm for both FC (female) mold half and the BC (male) mold half. Final process parameters include lower mold temperature and higher hold pressure than starting nominal conditions for FC (female) mold half and higher mold temperature and lower hold pressure for BC (male) mold half.

### Example 5 (invention)

Pellets of copolymer of propylene and ethylene polypropylene 3727W, which is available from Total Polyolefins, are introduced into the injection molding machines, one dedicated to the FC (female) mold half and a second to the BC (male) mold half. Process parameters are set at nominal values, based on experience molding polypropylene. In several iterative cycles of adjustment to process parameters and measurement of mold dimensions, the optimized process parameters are determined. Typically, adjustments were made to fill time, fill rate, recovery time injection pressure hold time, hold pressure, mold temperature, etc. Optimization is achieved when cylinder = 0 ± 0.020 mm or more preferable 0 ± 0.010 mm and out-of-roundness = 0 ± 0.020 mm or more preferable 0 ± 0.010 mm for both FC (female) mold half and the BC (male) mold half. Final process parameters are lower for injection velocity and higher for hold pressure than starting nominal conditions for FC (female) mold half and higher injection velocity, lower injection pressure, lower hold pressure, and longer hold time, resulting in an overall reduction in cycle time for the BC (male) mold half.

The results of the foregoing examples are summarized in the Table below. All cylinder measurements were made using Zygo Corporation interferometers (either PTI or GPX models). Overall part sphere quality was also assessed based on fringe-pattern evaluation using the Zygo interferometers. Diameter measurements for calculating out-of-roundness were made using an Optical Gaging Products Avant 200 video system.

| **Example** | **Manufacture/ Material** | **Ethylene % weight** | **Flexural Modulus (MPa)** | **Best Cylinder (mm), BC** | **Best Cylinder (mm), FC** | **Best Roundness (mm), BC** | **Best Roundness (mm), FC** |
|---|---|---|---|---|---|---|---|
| | | | | | | | |
| 1 | Exxon/ 1654 | 0 | 1550 | 0.020 | 0.035 | 0.030 | 0.050 |
| 2 | Flint Hills/ P4C5B-075 | 0 | 1300 | 0.016 | 0.028 | 0.030 | 0.054 |
| 3 | Flint Hills/ P4C5N-046 | 0 | 1590 | 0.009 | 0.009 | -0.011 | 0.013 |
| 4 | Flint Hills/ P5C5N-062 | <2 | 1303 | 0.005 | 0.008 | 0.003 | 0.020 |
| 5 | Total Polyolefins/ 3727W | <2 | 1310 | -0.004 | 0.000 | -0.003 | 0.001 |

These results illustrate that the mold of this invention exhibit exceptional low mold warpage or cylinder and low out-of-roundness.

It will be appreciated that the foregoing examples, given for purposes of illustration, are not to be construed as limiting the scope of this invention, which is defined by the following claims and all equivalents thereto.

## Claims

1. A method of cast molding contact lenses, comprising the steps of:
introducing a lens forming material into a mold, wherein the mold comprises a male section and a female section, wherein the male section and the female section are configured to receive each other to form a lens forming cavity, wherein at least one of the male section and the female section is injection molded from a copolymer of propylene and ethylene, wherein the copolymer comprises ethylene from about 0.1 percent to about 2.0 percent by weight and has a flexural modulus from about 950 to 1400 MPa;
curing the lens forming material in the lens forming cavity to form a contact lens.

2. The method of claim 1, wherein the copolymer comprises ethylene from about 0.2 percent to about 1.2 percent by weight.

3. The method of claim 2, wherein the copolymer comprises ethylene from about 0.3 percent to about 0.8 percent by weight.

4. The method of claim 1, wherein the copolymer has a flexural modulus from about 1100 to 1350 MPa.

5. The method of claim 4, wherein the copolymer has a flexural modulus from about 1250 to 1320 MPa.

6. The method of claim 1, wherein both the male section and the female section are made from injection molding of a copolymer of propylene and ethylene.

7. The method of claim 1, wherein the female section is made from injection molding of a copolymer of propylene and ethylene.

## Patentansprüche

1. Verfahren zum Giessformen von Kontaktlinsen umfassend die Schritte:
Einbringen eines linsenbildenden Materials in eine Form, wobei die Form einen männlichen Teil und einen weiblichen Teil umfasst, wobei der männliche Teil und der weibliche Teil so ausgebildet sind dass sie einander zur Bildung eines linsenformenden Hohlraums aufnehmen, wobei mindestens einer der Teile, der männliche Teil oder der weibliche Teil, mit einem Copolymer aus Propylen und Ethylen spritzgegossen wird, wobei das Copolymer Ethylen von etwa 0.1 Gewichtsprozent bis etwa 2.0 Gewichtsprozent enthält und einen Biegemodul von etwa 950 bis 1400 MPa aufweist;
Härten des linsenbildenden Materials im linsenformenden Hohlraum zur Bildung einer Kontaktlinse.

2. Verfahren gemäss Anspruch 1, wobei das Copolymer von etwa 0.2 Gewichtsprozent bis etwa 1.2 Gewichtsprozent Ethylen enthält.

3. Verfahren gemäss Anspruch 2, wobei das Copolymer von etwa 0.3 Gewichtsprozent bis etwa 0.8 Gewichtsprozent Ethylen enthält.

4. Verfahren gemäss Anspruch 1, wobei das Copolymer einen Biegemodul von etwa 1100 bis 1350 MPa aufweist.

5. Verfahren gemäss Anspruch 4, wobei das Copolymer einen Biegemodul von etwa 1250 bis 1320 MPa aufweist.

6. Verfahren gemäss Anspruch 1, wobei beide Teile, der männliche Teil und der weibliche Teil, durch Spritzgiessen eines Copolymers aus Propylen und Ethylen hergestellt sind.

7. Verfahren gemäss Anspruch 1, wobei der weibliche Teil durch Spritzgiessen eines Copolymers aus Propylen und Ethylen hergestellt ist.

## Revendications

1. Procédé de moulage par coulée de lentilles de contact, comprenant les étapes consistant à:
introduire un matériau formateur de lentille dans un moule, où le moule comprend une section mâle et une section femelle, dans lequel la section mâle et la section femelle sont configurées pour recevoir l'une l'autre et former une cavité de formation de lentille, dans lequel l'une au moins parmi la section mâle et la section femelle est moulée par injection à partir d'un copolymère de propylène et d'éthylène, dans lequel le copolymère comprend de l'éthylène à raison d'environ 0,1 pour cent à environ 2,0 pour cent en poids et possède un module d'élasticité en flexion d'environ 950 à 1400 MPa;
durcir le matériau formateur de lentille dans la cavité de formation de lentille pour former une lentille de contact.

2. Procédé selon la revendication 1, dans lequel le copolymère comprend de l'éthylène à raison d'environ 0,2 pour cent à environ 1,2 pour cent en poids.

3. Procédé selon la revendication 2, dans lequel le copolymère comprend de l'éthylène à raison d'environ 0,3 pour cent à environ 0,8 pour cent en poids.

4. Procédé selon la revendication 1, dans lequel le copolymère possède un module d'élasticité en flexion d'environ 1100 à 1350 MPa.

5. Procédé selon la revendication 4, dans lequel le copolymère possède un module d'élasticité en flexion d'environ 1250 à 1320 MPa.

6. Procédé selon la revendication 1, dans lequel aussi bien la section mâle que la section femelle sont produites par moulage par injection d'un copolymère de propylène et d'éthylène.

7. Procédé selon la revendication 1, dans lequel la section femelle est produite par moulage par injection d'un copolymère de propylène et d'éthylène.
